# EUROPÄISCHE PATENTANMELDUNG

(11) **EP 1 375 059 A2**
(43) Veröffentlichungstag der Anmeldung: **02.01.2004**
(21) Anmeldenummer: 03014254.1
(22) Anmeldetag: 25.06.2003
(51) Int. Cl.: B23Q 3/155

(54) **Einrichtung zum Bevorraten und Zurverfügungstellen von Maschinenwerkzeugen**

(30) Priorität: 26.06.2002 DE 10228651
(71) Anmelder: Demmeler, Johannes, 87737 Boos (DE)
(72) Erfinder: Demmeler, Johannes, 87737 Boos (DE)
(74) Vertreter: Hutzelmann, Gerhard

(57) **Zusammenfassung**

Einrichtung zum Bevorraten und Zurverfügungstellen von Maschinenwerkzeugen, mit einer Entnahmeposition, in welcher ein Greifarm(6) die einzelnen Werkzeuge entnehmen und wieder einsetzen kann, wobei die Werkzeuge auf wenigstens zwei Werkzeugträger-Einrichtungen(2) positioniert sind, die ineinander angeordnet und miteinander oder getrennt bewegbar sind.

## Beschreibung

Die Erfindung bezieht sich auf eine Einrichtung zum Bevorraten und Zurverfügungstellen von Maschinenwerkzeugen, mit einer Entnahmeposition, in welcher ein Greifarm die einzelnen Werkzeuge entnehmen und wieder einsetzen kann.

Derartige Einrichtungen sind in verschiedenen Ausführungsformen bekannt. Allen ist der entscheidende Mangel gemeinsam, daß sie nur verhältnismäßig wenige Werkzeuge aufzunehmen vermögen oder einen sehr großen Platzbedarf aufweisen.

Der Erfindung liegt die Aufgabe zugrunde, eine Einrichtung der genannten Art zu schaffen, die auf verhältnismäßig kleinem Raum eine große Zahl von Werkzeugen aufzunehmen vermag.

Diese Aufgabe wird erfindungsgemäß dadurch gelöst, daß die Werkzeuge auf wenigstens zwei Werkzeugträger-Einrichtungen positioniert sind, die ineinander angeordnet und miteinander oder getrennt bewegbar sind.

Die ineinander angeordneten Werkzeugträger-Einrichtungen erlauben eine sehr hohe Ausnutzung des zur Verfügung stehenden Raumes. Darüber hinaus sind die einzelnen Werkzeuge schnell in die Entnahmeposition bringbar.

Eine vorteilhafte Ausgestaltung der Erfindung liegt darin, daß die Werkzeugträger-Einrichtungen an endlosen Ketten oder dergleichen angeordnet oder als solche ausgebildet sind, wobei wenigstens zwei dieser Ketten od.dgl. vorgesehen sind, die ineinander verlaufen.

Eine weitere vorteilhafte Ausgestaltung der Erfindung ist dadurch gekennzeichnet, daß die Werkzeugträger-Einrichtungen auf konzentrisch zueinander angeordneten Scheiben bzw. Scheibenringen angeordnet sind, bzw. als solche ausgebildet sind.

Dabei ist es besonders vorteilhaft, wenn gemäß einer weiteren Ausgestaltung der Erfindung eine drehbar gelagerte und antreibbare Zentralwelle vorgesehen ist, mit welcher der innerste Scheibenring drehfest verbunden ist.

Damit wird dieser innerste Scheibenring immer zwangsläufig mitgedreht sobald die Zentralwelle angetrieben wird.

Als sehr vorteilhaft hat es sich erwiesen, wenn gemäß einer weiteren Ausgestaltung der Erfindung die konzentrisch zueinander angeordneten Scheibenringe miteinander drehfest verbindbar sind.

Damit kann die Drehbewegung der Zentralwelle auf alle Scheibenringe übertragen werden.

Ebenfalls sehr vorteilhaft ist es, wenn erfindungsgemäß die Zentralwelle in Längsrichtung verstellbar angeordnet ist.

Dadurch können die einzelnen Scheibenringe auf einfache Weise voneinander getrennt werden.

Dabei hat es sich als besonders vorteilhaft ergeben, wenn gemäß einer Weiterbildung der Erfindung Ablagen für die um den inneren Scheibenring angeordneten weiteren Scheibenringe vorgesehen sind, auf welchen sich die einzelnen Scheibenringe beim Zurückziehen der Zentralwelle abzustützen vermögen.

Sehr vorteilhaft ist es dabei auch, wenn erfindungsgemäß an den Übergängen der Scheibenringe zum jeweils benachbarten Scheibenring Verriegelungselemente vorgesehen sind, die beim Ausfahren der Zentralwelle ineinandergreifen.

Damit ist auf einfache Weise eine Antriebskopplung der einzelnen Scheibenringe mit der Zentralwelle erreicht.

Dabei hat es sich als besonders vorteilhaft erwiesen, wenn die Verriegelungselemente selbstzentrierend ausgebildet sind.

Damit wird ein einfaches Justieren der einzelnen Werkzeugpositionen erzielt.

Für die Antriebskopplung hat es sich als sehr vorteilhaft erwiesen, wenn die Zentralwelle mit einem hydraulischen oder pneumatischen Kolben verbunden ist.

Besonders günstig ist es dabei, wenn gemäß einer weiteren Ausgestaltung der Erfindung der Kolben mehrteilig ausgebildet ist, wobei jeder der mehrteiligen Kolben mit einem Anschlag versehen ist.

Damit können für die einzelnen Verbindungsstufen der Scheibenringe nur der jeweils notwendige Kolben betätigt werden, der durch Anlegen am jeweiligen Anschlag die Position des Scheibenrings festlegt.

Eine weitere vorteilhafte Ausgestaltung der Erfindung ist dadurch gekennzeichnet, daß mehrere der ineinander angeordneten Werkzeugträger-Einrichtungen hinter- bzw. übereinander angeordnet sind.

Dadurch ist eine Vielzahl von Werkzeugen auf sehr kleinem Raum unterzubringen, wobei gewährleistet ist, daß jedes einzelne Werkzeug sehr schnell erreichbar und entnehmbar ist.

Bei einer erfindungsgemäßen Einrichtung mit als Scheibenringe ausgebildeten Werkzeugträgem, hat es sich als sehr vorteilhaft erwiesen, wenn die Scheibenringe horizontal ausgerichtet und mehrere Scheibenring-Anordnungen turmartig übereinander angeordnet sind.

Sehr vorteilhaft ist es dabei, wenn gemäß einer weiteren Ausgestaltung der Erfindung ein in mehreren Ebenen verfahrbarer Greiferarm vorgesehen ist, der die einzelnen Werkzeug-Aufnahmen anzufahren vermag.

Mit einem derartigen Greiferarm können die einzelnen Werkzeuge, die vorher in eine festgelegte Entnahmeposition gefahren wurden, sehr schnell entnommen und der Werkzeugmaschine zugeführt bzw. nach Gebrauch wieder abgestellt werden.

Eine weitere vorteilhafte Ausgestaltung der Erfindung liegt darin, daß ein Werkzeugträger zur Aufnahme von Werkzeugen vorgesehen ist, die zu Servicezwecken getrennt entnehmbar bzw. einsetzbar sind.

Damit ist gewährleistet, daß die Werkzeuge ohne Störung des Betriebes entnommen und wieder eingelegt werden können.

Als sehr vorteilhaft hat sich auch eine weitere Ausgestaltung der Erfindung ergeben, gemäß welcher ein gemeinsamer Greiferarm für mehrere turmartigen Scheibenring-Anordnungen vorgesehen ist.

Bei sehr hohen Stückzahlen von benötigten Werkzeugen hat sich eine derartige Anordnung sehr bewährt.

In der Zeichnung ist die Erfindung anhand eines Ausführungsbeispiels veranschaulicht. Dabei zeigen:
- Fig. 1: eine schaubildliche Darstellung einer turmartigen Scheibenring-Anordnung, wobei die Scheibenringe mit Werkzeugaufnahmen versehen sind,
- Fig.2: eine Schnittdarstellung des Werkzeug-Turmes,
- Fig.3: den Werkzeug-Turm gemäß Fig.2 in größerem Maßstab und
- Fig.4: eine schematische Darstellung eines Greiferarmes zum Entnehmen von Werkzeugen aus den Werkzeugaufnahmen.

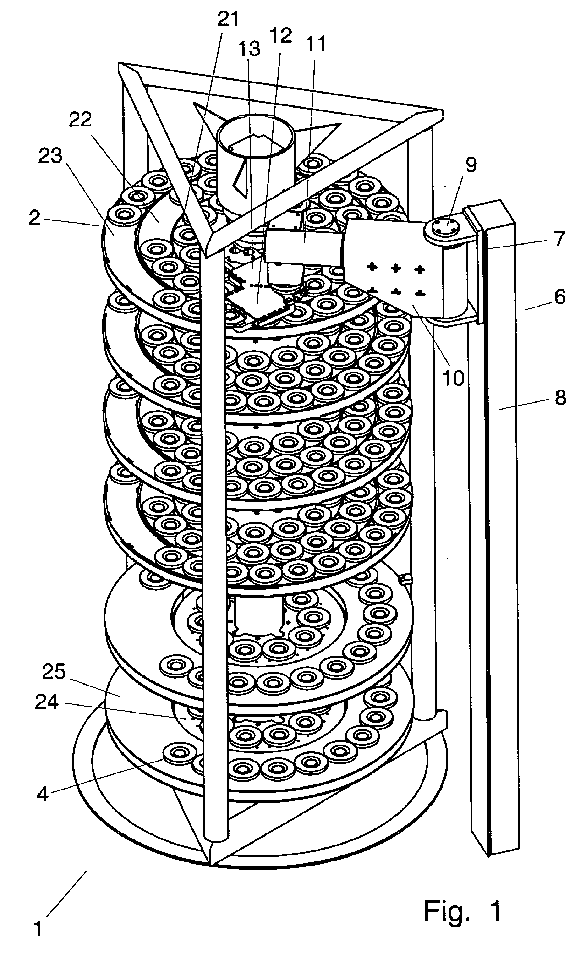

Mit 1 ist in Fig. 1 ein Werkzeug-Turm bezeichnet, der mehrere übereinander angeordnete Werkzeugträger-Einrichtungen 2 aufweist, die alle mit einer vertikal angeordneten Zentralwelle 3 verbunden sind. Die einzelnen Werkzeugträger-Einrichtungen 2 sind jeweils mehrteilig, als ineinanderpassende Scheibenringe 21,22,23 bzw. 24,25 ausgebildet, dabei ist der innerste Scheibenring 21 bzw. 24 fest mit der Zentralwelle 3 verbunden, während die weiter außen liegenden Scheibenringe 22 und 23 bzw. 25 mit dem inneren Scheibenring verbindbar sind. Auf jedem dieser Scheibenringe 21,22,23,24,25 sind in entsprechende Ausnehmungen Aufnahmen 4 eingesetzt, die zur unmittelbaren Aufnahme von nicht dargestellten Werkzeugen dienen.

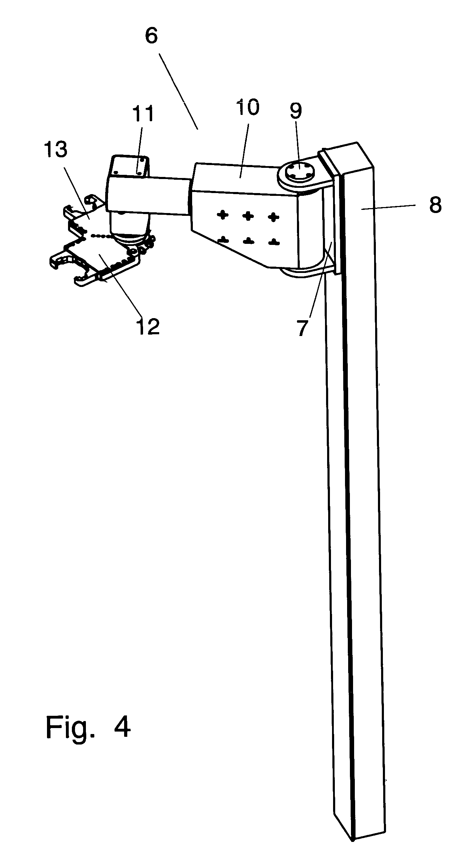

Zur Entnahme der Werkzeuge aus den Aufnahmen 4 ist ein Greiferarm 6 vorgesehen, wie er in Fig.4 näher dargestellt ist.

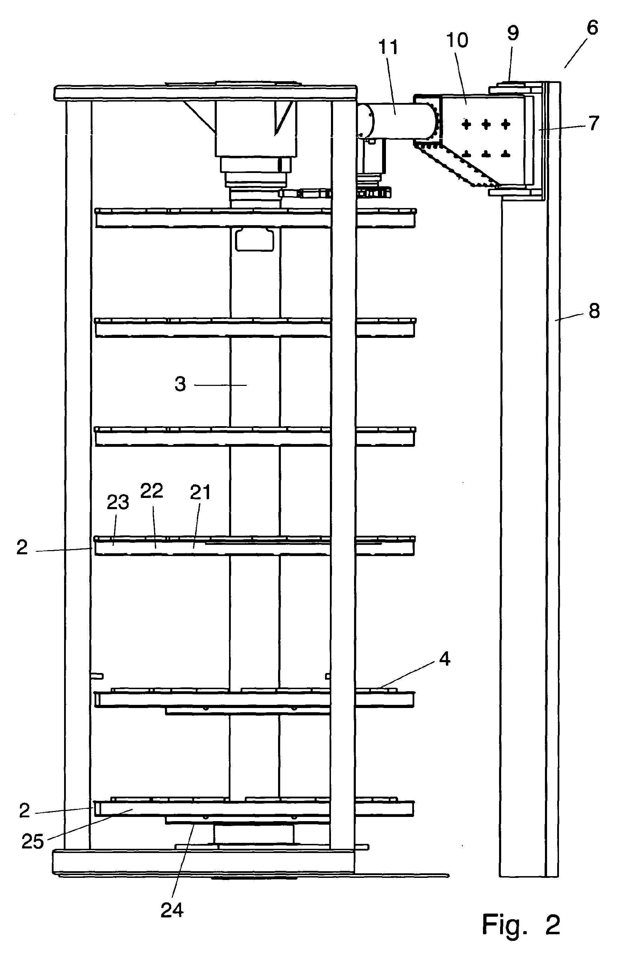

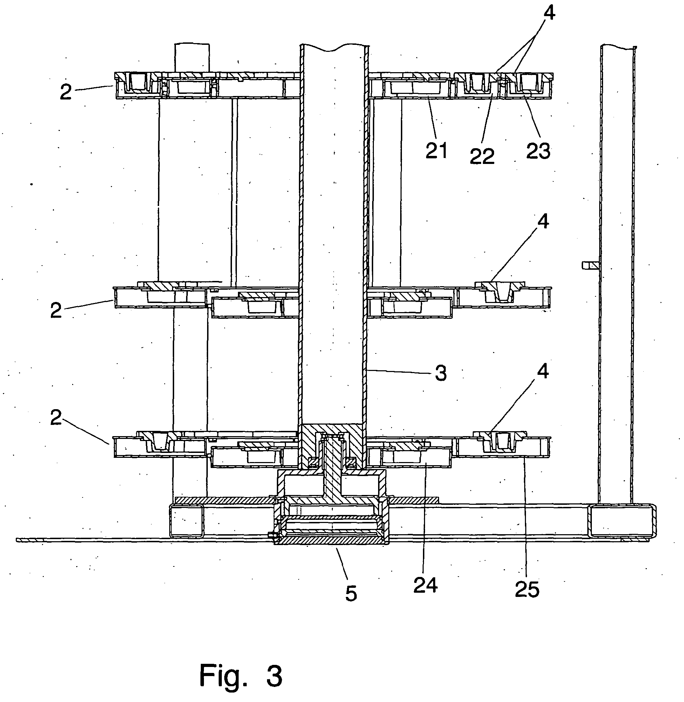

Die Fig.2 zeigt den Werkzeug-Turm 1 nach Fig. 1 in einer Schnittdarstellung und Fig.3 den unteren Abschnitt des Werkzeug-Turmes 1 in vergrößertem Maßstab. Die beiden unteren Werkzeugträger-Einrichtungen 2 weisen zwei Scheibenringe 24 und 25 auf, während die dritte und alle weiteren Werkzeugträger-Einrichtungen aus drei Scheibenringen 21,22,23 aufgebaut sind. Dabei sind die Außendurchmesser der jeweils äußeren Scheibenringe 23 und 25 gleich. Damit ergibt sich die Möglichkeit, in den beiden unteren Werkzeugträger-Einrichtungen größere Werkzeuge einzulagern während die dreiteiligen Werkzeugträger-Einrichtungen zur Aufnahme kleinerer Werkzeuge bestimmt sind.

Die Zentralwelle 3 ist an ihrem unteren Ende mit einem mehrteiligen Kolben 5 versehen, wodurch die Welle 3 in mehreren Schritten anhebbar ist. In der untersten Stellung sind nur die jeweils innersten Scheibenringe 21 und 24, die fest mit der Zentralwelle verbunden sind, angetrieben, während die übrigen Scheibenringe 22,23 bzw. 25 auf nicht dargestellten Ablagen ruhen und von dem innersten Scheibenring abgekoppelt sind.

In einer ersten Hubposition wird über nicht dargestellte Mitnehmer der an den innersten Scheibenring anschließende Scheibenring 22 bzw. 25 an diesen gekoppelt und wird - sobald sich die Zentralwelle dreht - mitgedreht.

Beim Anheben der Zentralwelle 3 in eine dritte Position werden auch die jeweils dritten Scheibenringe an den zweite Scheibenring und damit an die Zentralwelle gekoppelt, so daß sich alle Scheibenringe gleichzeitig drehen.

Der in Fig.4 näher dargestellte Greiferarm 6 ist in mehreren Ebenen verstellbar, so daß er alle eingelagerten Werkzeuge erfassen und einer Werkzeugspindel zuführen bzw. die Werkzeuge aus dieser Werkzeugspindel entnehmen und der entsprechenden Position im Werkzeug-Turm zuführen kann.

Der Greiferarm 6 ist mit einem Schlitten 7 an einer vertikal verlaufenden Bahn 8 über die gesamte Höhe des Werkzeug-Turmes verfahrbar gelagert. Über ein Gelenk 9 ist an diesem Schlitten 7 ein Tragarm 10 befestigt, wodurch der Tragarm horizontal verschwenkt werden kann. Am vom Schlitten 7 abgekehrten Ende des Tragarmes 10 ist ein Drehlager 11 vorgesehen, das gegenüber dem Tragarm um eine horizontale Achse drehbar ist. Am Ende des Drehlagers 11 ist ein Doppelgreifer 12 über ein weiteres Schwenklager 13 gelagert.

Der Tragarm 10 kann dabei zusätzlich in Längsrichtung ausfahrbar ausgestaltet sein.

Alle Fahr- und Drehbewegungen können zeitgleich ausgeführt werden, so daß ein sehr schnelles Verfahren in die gewünschte Position erfolgen kann.

## Patentansprüche

1. Einrichtung zum Bevorraten und Zurverfügungstellen von Maschinenwerkzeugen, mit einer Entnahmeposition, in welcher ein Greiferarm(6) die einzelnen Werkzeuge entnehmen und wieder einsetzen kann, **dadurch gekennzeichnet, daß** die Werkzeuge auf wenigstens zwei Werkzeugträger-Einrichtungen(2) positioniert sind, die ineinander angeordnet und miteinander oder getrennt bewegbar sind.

2. Einrichtung nach Anspruch 1, **dadurch gekennzeichnet, daß** die Werkzeugträger-Einrichtungen(2) an Ketten oder dergleichen angeordnet oder als solche ausgebildet sind, wobei wenigstens zwei dieser Ketten od.dgl. vorgesehen sind.

3. Einrichtung nach Anspruch 1, **dadurch gekennzeichnet, daß** die Werkzeugträger-Einrichtungen(2) auf konzentrisch zueinander angeordneten Scheiben bzw. Scheibenringen(21,22,23;24,25) angeordnet sind, bzw. als solche ausgebildet sind.

4. Einrichtung nach Anspruch 3, **dadurch gekennzeichnet, daß** eine drehbar gelagerte und antreibbare Zentralwelle(3) vorgesehen ist, mit welcher der innerste Scheibenring(21,24) drehfest verbunden ist.

5. Einrichtung nach Anspruch 3 oder 4, **dadurch gekennzeichnet, daß** die konzentrisch zueinander angeordneten Scheibenringe(21,22,23;24,25) miteinander drehfest verbindbar sind.

6. Einrichtung nach Anspruch 4 oder 5, **dadurch gekennzeichnet, daß** die Zentralwelle(3) in Längsrichtung verstellbar angeordnet ist.

7. Einrichtung nach Anspruch 6, **dadurch gekennzeichnet, daß** Ablagen für die um den inneren Scheibenring(21,24) angeordneten weiteren Scheibenringe(22,23;25) vorgesehen sind, auf welchen sich die einzelnen Scheibenringe beim Zurückziehen der Zentralwelle(3) abzustützen vermögen.

8. Einrichtung nach Anspruch 7, **dadurch gekennzeichnet, daß** an den Übergängen der Scheibenringe(21,22,23,24,25) zum jeweils benachbarten Scheibenring Verriegelungselemente vorgesehen sind, die beim Ausfahren der Zentralwelle(3) ineinandergreifen.

9. Einrichtung nach Anspruch 8, **dadurch gekennzeichnet, daß** die Verriegelungselemente selbstzentrierend ausgebildet sind.

10. Einrichtung nach einem der Ansprüche 6 bis 9, **dadurch gekennzeichnet, daß** die Zentralwelle(3) mit einem hydraulischen oder pneumatischen Kolben(5) verbunden ist.

11. Einrichtung nach Anspruch 10, **dadurch gekennzeichnet, daß** der Kolben(5) mehrteilig ausgebildet ist, wobei jeder der mehrteiligen Kolben mit einem Anschlag versehen ist.

12. Einrichtung nach einem der vorhergehenden Ansprüche, **dadurch gekennzeichnet, daß** mehrere der ineinander angeordneten Werkzeugträger-Einrichtungen(2) hinter- bzw. übereinander angeordnet sind.

13. Einrichtung nach Anspruch 12, mit als Scheibenringe ausgebildeten Werkzeugträgern, **dadurch gekennzeichnet, daß** die Scheibenringe(21,22,23;24,25) horizontal ausgerichtet sind und mehrere Scheibenring-Anordnungen(2) turmartig übereinander angeordnet sind.

14. Einrichtung nach Anspruch 13, **dadurch gekennzeichnet, daß** ein in mehreren Ebenen verfahrbarer Greiferarm(6) vorgesehen ist, der die einzelnen Werkzeug-Aufnahmen(4) anzufahren vermag.

15. Einrichtung nach einem der vorhergehenden Ansprüche, **dadurch gekennzeichnet, daß** ein Werkzeugträger zur Aufnahme von Werkzeugen vorgesehen ist, die zu Servicezwecken getrennt entnehmbar bzw. einsetzbar sind.

16. Einrichtung nach Anspruch 14, **dadurch gekennzeichnet, daß** ein gemeinsamer Greiferarm(6) für mehrere turmartigen Scheibenring-Anordnungen(1) vorgesehen ist.
